# EUROPEAN PATENT SPECIFICATION

(11) **EP 2 594 953 B1**
(45) Date of publication and mention of the grant of the patent: **07.03.2018**
(21) Application number: 11189872.2
(22) Date of filing: 21.11.2011
(51) Int. Cl.: G01S 5/02, G01C 5/06

(54) **Height calibration process**
Verfahren zur präzisen Kalibrierung
Procédé d'étalonnage de hauteur

(43) Date of publication of application: 22.05.2013
(73) Proprietor: 9Solutions Oy, 90590 Oulu (FI)
(72) Inventor: Hiltunen, Antti, 90130 Oulu (FI); Pesonen, Arto Tapio, 90450 Kempele (FI)
(74) Representative: Kolster Oy Ab

(56) References cited:
- EP-A1- 1 154 231
- EP-A1- 1 166 142
- EP-A1- 2 182 321
- WO-A2-2012/052766
- US-A- 5 652 592
- US-A1- 2009 322 548

## Description

### Field

The invention relates generally to field of wireless networking and, particularly, to a height calibration process in a wireless location tracking network.

### Background

A calibration is used to verify the accuracy of a calibrated device. The device may provide indication of its location, its altitude, timing related parameters, etc. It may be that the device may have been used for a long time without being calibrated. In such scenario, the accuracy of the information provided by the device may have degraded. For this reason, the calibration of the device may be in order. Prior art teaches that the device needs to be brought to a vicinity of a separate counter device that performs the calibration (calibrating device). The calibrating device and the calibrated device may be connected to each other via a wire, for example. Without calibration, a height sensor, for example, may be tracked in the wrong location or in the wrong floor of a building.

However, there are problems with the prior art teachings. The need to bring the calibrated device to a separate calibrating device is both cumbersome and time consuming. Furthermore, the calibrated device usually needs to be shut down during the calibration.

US 5 652 592 discloses a system for calculating the Z-Axis, or relative height or altitude, of a radio beacon. The present invention uses a barometric pressure sensing device co-located with the radio emitter to transmit data representing relative altitude. To further enhance the Z-Axis determination, one or several barometric sensors, located at known heights, are positioned around the city to provide real time barometric data. This real time data is used to form a differential correction factor which is compared to the to the time varying barometric sensor co-located with the radio emitter, thereby yielding Z-Axis accuracies of up to one (1) foot. Since the altitude essentially becomes a "known", this information can also be used in the least squares fit algorithm to enhance the X and Y determination as well. As an alternative to differential readings from "known" altitude barometric sensors, the X,Y position of the radio emitter itself, or a check-in by a user, can be used to determine times when the radio emitter is at a known altitude thus providing occasional positions for "self' correction. Further, a mobile barometric reference, with a known Z-axis, can be purposely brought in proximity of the unknown altitude transmitter by, for example, a search team to provide differential information. Lastly, additional radio techniques are taught to assist a mobile search team.

EP 1 166 142 discloses a locator that receives signals from at least one beacon. At least one beacon has a barometer for measuring local air pressure. The air pressure information is transmitted by the beacons with the position finding signals. The locator uses the local air pressure information to calibrate its barometer. The barometer may be used to measure the altitude of the locator.

EP 1 154 231 discloses a communication device and method for estimating a more accurate vertical position or altitude of a communication device using atmospheric pressure measurements. In one embodiment, a first communication device comprises a pressure sensor for measuring local atmospheric pressure at the first communication device and a transceiver for communicating with a second communication device, wherein the transceiver may be operable to receive barometric calibration information for calibrating a local atmospheric pressure measured at the first communication device and/or to transmit the measured local atmospheric pressure to the second communication device. The first communication device may further comprise a processor for estimating an altitude using the measured local atmospheric pressure and received barometric calibration information.

WO 2012/052766 discloses a position determination system comprising one or more fixed base units and one or more mobile units, wherein the system is arranged to determine the horizontal position of a mobile unit based on the proximity of said mobile unit to at least one base unit and wherein the system is arranged to determine the height of said mobile unit based on the air pressure sensed at the mobile unit and the air pressure sensed at one or more of the base units. The use of pressure sensors to determine height reduces the complexity of the infrastructure required for 3D positioning. The invention finds particular benefit in patient care and monitoring environments and in object tracking and inventory systems. The invention also extends to mobile units for use in the system, intelligent buildings fitted with the system and to methods of determining the position of mobile units.

### Brief description of the invention

Embodiments of the invention seek to improve the calibration of a height sensor.

According to an aspect of the invention, there is provided a system as specified in claim 1.

According to an aspect of the invention, there are provided methods as specified in claims 11 and 13.

According to an aspect of the invention, there is provided an apparatus as specified in claim 15.

Embodiments of the invention are defined in the dependent claims.

### List of drawings

In the following, the invention will be described in greater detail with reference to the embodiments and the accompanying drawings, in which
Figure 1 presents location tracking network where the embodiments are applicable;
Figure 2 shows a location network according to an embodiment;
Figure 3 shows a location tracking network where a mobile tag is located in a wrong floor;
Figure 4 illustrates block diagrams of apparatuses according to some embodiments;
Figures 5 to 7 present scenarios where a calibration process is carried out, according to some embodiments; and
Figures 8 to 10 depict signal flow diagrams regarding the calibration process, according to some embodiments.

### Description of embodiments

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

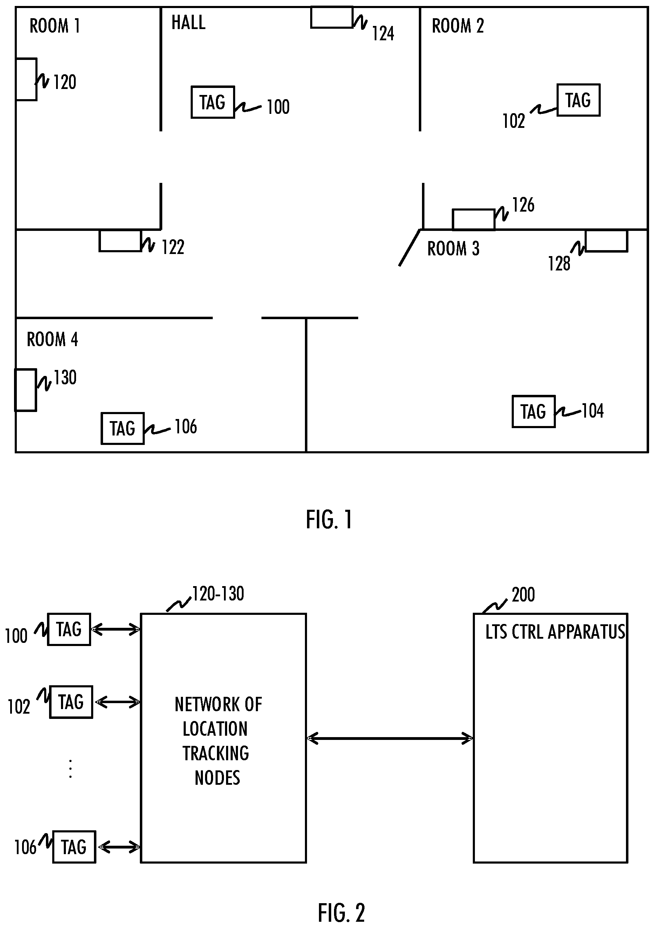

Figure 1 illustrates an exemplary layout of a building to which a location tracking system (LTS) may be applied. The LTS is particularly suitable for indoor location tracking, but the LTS may equally be utilized in outdoor applications. The layout of Figure 1 illustrates a number of rooms with doors illustrated by discontinuations in the room walls, and a hall providing access from one room to another. People inside the building that are being location-tracked are represented by their user equipment or, as from now on called, mobile tags 100, 102, 104, and 106.

The location tracking is enabled by disposing a plurality of location tracking nodes (or LTS nodes or nodes) 120 to 130 throughout the building where the location tracking is to be carried out. The LTS nodes 120 to 130 may be radio communication devices, each configured to provide a coverage area effectively defined by transmission power, for example, and the combined coverage areas of the LTS nodes 120 to 130 cover the location tracking area. The LTS nodes 120 to 130 may also form a network enabling data routing between the nodes 120 to 130 and through the nodes 120 to 130. A location tracking apparatus or a module, that may be comprised in a LTS control apparatus, also known as the server of the LTS, controlling the operation parameter of the location tracking network, may be connected to the network of LTS nodes 120 to 130, and the location tracking apparatus may be configured to maintain locations of tracked objects and control the location tracking and other features of the LTS. The LTS control apparatus and the location tracking apparatus may be realized by a computer provided with suitable communication equipment so as to enable a communication connection with the LTS nodes 120 to 130. The LTS control apparatus may be connected to a router via an Internet Protocol (IP) connection, and the router may be configured to connect to the network of LTS nodes 120 to 130 through another connection type, for example. The connection in the network of LTS nodes 120 to 130 may be configured to establish the network according to a Bluetooth technology, but it should be understood that other radio communication schemes may be used as well.

The locations of objects are tracked by tracking movement of tags 100 to 106 attached to the objects. As examples of the tags 100 to 106, a user tag may be carried by a person, and an asset tag may be attached to an asset. The asset may be any mobile or portable apparatus that is wanted to be tracked, e.g. a wheelchair, a computer, or expensive industrial testing equipment. The asset tag may equally be attached to a fixed apparatus, e.g. a safe, a projector, in order to detect attempted robbery. The different tags 100 to 106 whose movement and location are tracked may be called generally mobile tags, although some of the tags 100 to 106 may actually be in a substantially fixed position. The location tracking may be based on a scheme where a mobile tag is configured to detect the closest LTS node and to transmit to the LTS control apparatus periodically a message comprising an identifier of the mobile tag and an identifier of the detected closest LTS node, or a plurality of detected LTS nodes. The message may be routed through the network of LTS nodes 120 to 130 to the LTS control apparatus 200, or a control apparatus, as shown in Figure 2. As the LTS control apparatus 200 is provided with information on fixed locations of the LTS nodes, e.g. in a layout of the area, the LTS control apparatus is able to associate the mobile tag with the LTS node on the basis of the received message and, thus, determine the location of the mobile tag and the object associated with the mobile tag. In another embodiment, an LTS node is configured to detect mobile tags in its coverage area and transmit periodically identifiers of detected mobile tags to the LTS control apparatus. Similarly, the LTS control apparatus 200 may then determine the location of each mobile tag on the basis of the LTS nodes that have detected the mobile tag. The detection of the LTS nodes or mobile tags may be based on Bluetooth inquiry procedure. The LTS may, however, utilize another location tracking scheme and/or another communication scheme.

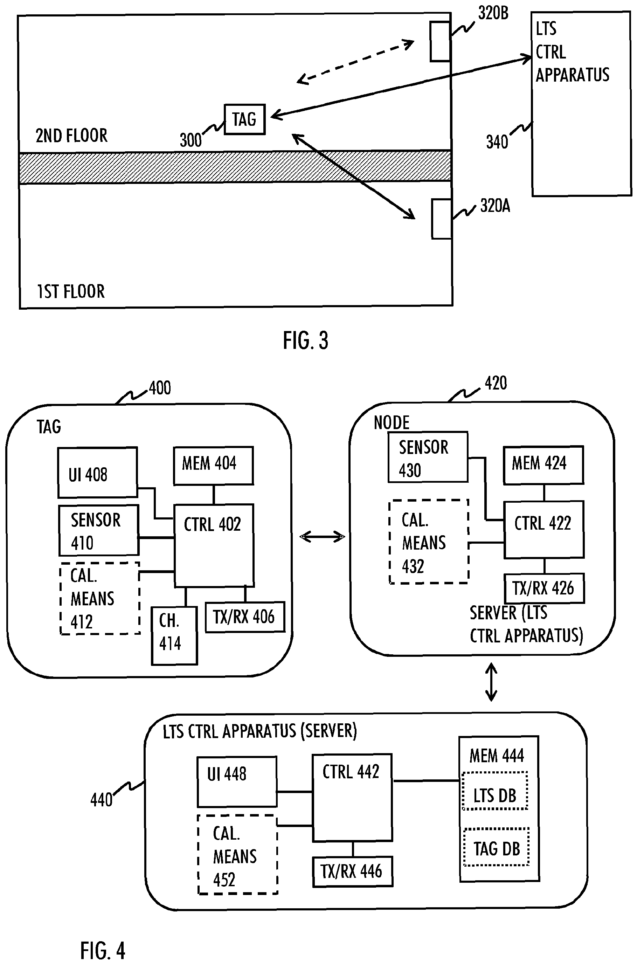

Figure 3 shows a scenario where a node 320A fixed to the wall of a first floor detects a mobile tag 300 located in a second floor. The second floor may also be equipped with a node 320B. However, due to obstacles between the mobile tag 300 and the node 320B, the tag 300 may erroneously become located to the first floor. The floor material, shown with right leaning diagonal lines, between the first and the second floor may be made of a material which easily allows radio frequency signals to penetrate. Therefore, the tag 300 may obtain a stronger signal from the node 320A than from the node 320B. Similarly, in the embodiment, where the nodes listen to the identifier being transmitted by the tag 300, the node 320A may obtain a stronger signal than the node 320B. Thus, the solid arrow between the tag 300 and the node 320A represents established location related communication, whereas the dashed arrow between the tag 300 and the node 320B represents non-established location related communication as the signal strength is too weak, for example. As a result, the node 320A indicates the identifier of the tag 300 to the LTS control apparatus 340, or the tag 300 informs the identifier of the node 320A to the LTS control apparatus 340, for example. The LTS control apparatus 340 may know that the node 320A is located in the first floor from installation information and thus the LTS control apparatus 340 may assume that the tag 300 is located in the first floor. In other words, although the scenario of Figure 3 may somewhat accurately indicate the location of the tag 300 in the horizontal plane, the tag 300 becomes located in the wrong floor, i.e. at the wrong height or elevation.

At least partly for the reasons described above it is proposed that a mobile tag 400, as shown in Figure 4, comprises a height sensor 410 configured to estimate the height, i.e. the altitude, of the mobile tag 400 at a given time. The mobile tag 400 may further indicate the estimated height to the at least one node the mobile tag 400 is communicating with. The height may be obtained by measuring air pressure by the height sensor, for example. The height sensor 410 may in an embodiment be an altimeter configured to detect the altitude of the mobile tag 400. The obtained height may then be indicated to at least one node by means of radio interface components, also known as communication circuitry 406. The node may then forward the indication to the LTS control apparatus 440, for example. This way the LTS control apparatus 440, or the LTS control apparatus, may obtain knowledge of the height where the mobile tag 400 is and may thus locate the mobile tag 400 in a certain floor, for example. This is advantageous so that erroneous location of the mobile tag 400, as was shown in Figure 3, may be avoided. However, it may occur that the height sensor 410 of the mobile tag 400 is not providing the correct height or at least not accurate height of the mobile tag 400. The inaccuracy may be due to a fact that the height sensor 410 is not calibrated, for example. Or it may be that it has already been some time since the height sensor 410 was previously calibrated to the correct height. However, taking the mobile tag 400 comprising the height sensor 410 to be calibrated in a separate calibration facility may be a cumbersome and time consuming task.

At least partly for this reason it is further proposed that at least one location tracking node of the plurality of location tracking nodes is a calibration node 420 configured to co-operate in carrying out a height calibration process during operation of the location tracking network. The calibration node 420 may thus also perform the location tracking of the mobile tag, but in addition, the calibration node 420 is capable of co-operating in the calibration process of the height sensor 410 of the mobile tag 400. In other words, the calibration process may take place during the operation of the location tracking network. This may advantageously allow for uninterrupted location tracking of the mobile tag 420 and practically invisible calibration process from the user point of view.

The calibration process may be at least with respect to height. In other words, the calibration process may aim in improving the probabilities that the height sensor 410 of the mobile tag 400 provides correct height values or that the correction to the height values provided by the mobile tag 400 are correctable at the receiver. It may be that the height sensor 410 is providing height values which are, for example, one meter off the correct height. In this case, calibration may be in order so that the height sensor 410 or the mobile tag 400 may apply the one meter correction to the estimated height. Alternatively, the apparatus receiving the indication of the estimated height may apply the one meter correction to the received indication of the height of the mobile tag 400.

The co-operation by the calibration node 420 may comprise various aspects. In an embodiment, the calibration node 420 forwards data related to the calibration process between the mobile tag 400 and the LTS control apparatus 440 of the location tracking network, wherein the LTS control apparatus 440 co-operates in carrying out the calibration process. It may be that the calibration node 420 itself does not comprise any calibration means 432 but the LTS control apparatus, also known as the control apparatus, comprises calibration means 452 configured to carry out the calibration process. This may provide for a simple structure of the calibration node 420 as the calibration process is mainly carried out it the mobile tag 400 and in the LTS control apparatus 440. This embodiment may also provide for centralized calibration process because the LTS control apparatus 440 of the location tracking network is also responsible of the calibration of the height sensor.

In another embodiment, the calibration node 420 comprises the calibration means 432 configured to carry out the calibration process without calibration related input from the LTS control apparatus 440. This type of distributed calibration process may provide for flexibility in the calibration process because each calibration node 420 comprising separate calibration means 432 may be independently controlled. Also the LTS control apparatus 440 may have a simpler configuration with respect to the calibration process because the LTS control apparatus 440 may not need to be aware where and when the calibration process is carried out. This may allow the LTS control apparatus 440 to perform other functions, such as location tracking, at the same time as the calibration node 420 performs the calibration process in co-operation with the mobile tag 400.

As said, the height of each calibration node 420 may be known. In an embodiment, the height of each calibration node, and also possibly the height of other location tracking nodes which may not necessarily co-operate in carrying out the calibration process, may be known because they may be installed to fixed positions on the wall, for example. Thus, the installation height may be recorded and possibly stored in the memory 424 of the corresponding node. In addition, the memory 444 of the LTS control apparatus 440 may be updated to store such height related information of the nodes. Alternatively or in addition to, each calibration node may be equipped with a height sensor, such as an altimeter, that may measure the height of the calibration node. In this embodiment, the memory may not be needed for storing the height related information. As the LTS nodes may also provide height information based on air pressure, for example, the location of the mobile tag 400 may be more accurately estimated based on the height information from the LTS nodes and from the mobile tag 400.

In an embodiment, the calibration process is carried out without user intervention. This advantageously may provide that the user need not know that the mobile tag 400, comprising the height sensor 410, is at a point in time being calibrated. The user need not perform anything out of the ordinary as will be clear from at least some of the embodiments described below. The user need not, for example, take the mobile tag to be calibrated in a separate location dedicated for calibration purposes.

In an embodiment, the height of the at least one calibration node 400 is known at a floor accuracy. In other words, the story of the building, where the calibration node 420 is mounted, is significant, not the exact height of the node. This allows for more flexibility in measuring the height of the calibration node 400 because it needs to be known only at the floor accuracy. Also in many applications the mobile tag 400 needs to be located only at the floor accuracy. According to this embodiment, the calibration process may also be carried out with the floor accuracy. For example, when the height estimated by the height sensor 410 of the mobile tag 400 indicates a floor which is incorrect with respect to the floor where the mobile tag 400 is currently located, then the calibration process may advantageously cause the height sensor to adjust its estimation of height to the correct direction.

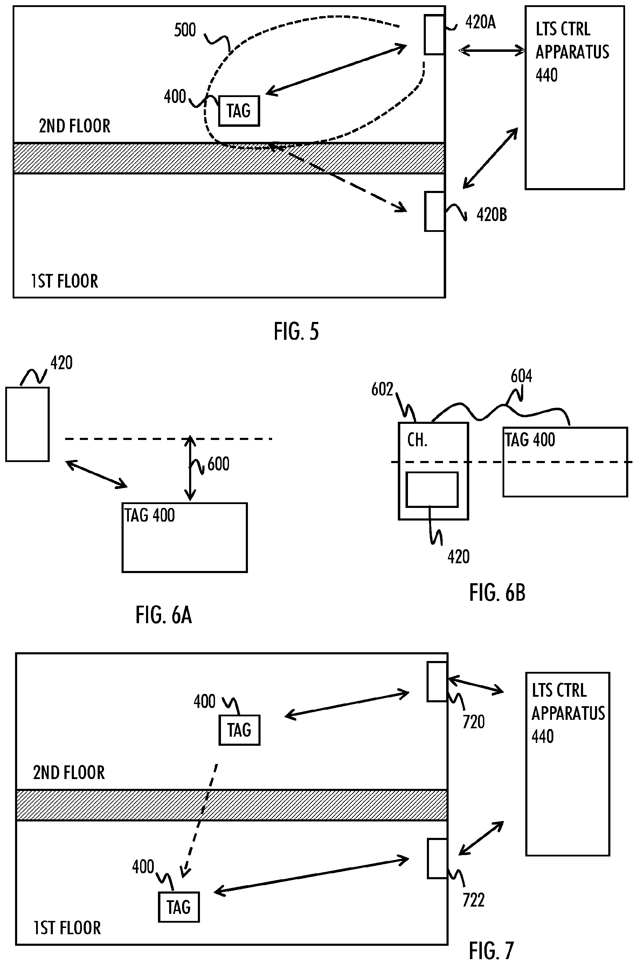

Figure 5 shows an embodiment where the calibration node 420 is configured to co-operate in carrying out the calibration process when the mobile tag 400 is in a location where the mobile tag 400 is in the coverage area 500 of the calibration node 420 and the mobile tag 400 is in the same floor as the calibration node. The mobile tag 400 is in the coverage area 500 of the calibration node 420 when the calibration node 420 receives the identifier of the mobile tag 400 which is broadcasted by the mobile tag 400. Alternatively, the mobile tag 400 may be said to be in the coverage area 500 of the calibration node 420 when the mobile tag 400 receives an identifier of the calibration node 420. Thus, the actual identifier reception need not take place by the calibration node 420. In Figure 5 the reference numeral 500 shows the coverage area of the calibration node 420A. When the tag 400 is within the coverage area 500, the tag 400 may be detectable by the calibration node 420A.

In the embodiment of Figure 5, the calibration process may be carried out at the floor accuracy. Therefore, when it is known that the mobile tag 400 is at the same floor as the node 420A, i.e. in the second floor, the calibration process may be carried out between the node 420A and the tag 400. Thus, even though, as shown in Figure 3, it may be that the tag 420 is in the coverage area of a calibration node 420B located in the first floor, the calibration process is not carried out by the calibration node 420B. This is shown with a dashed line in the Figure 5, whereas a solid line between the calibration node 420A and the tag 400 shows ongoing calibration process.

The calibration node 420A may obtain knowledge that the tag is in the same floor as the node 420A itself in many ways. In an embodiment, the node 420A obtains this information from the LTS control apparatus 440. The LTS control apparatus 440 may have obtained this information from the other LTS nodes, for example. That is, if several nodes indicate that the tag 400 is in the second floor, then the LTS control apparatus 440 may accept such indication even though the node 420B may indicate otherwise. There may be a threshold set for the acceptance that the tag 400 is with a high probability in certain floor, for example. In another embodiment, the floor may be equipped with LTS nodes in certain locations such that the mobile tag 400 present in the same floor necessarily becomes located by one of the LTS nodes. Such location may be for example a door frame before entering a room of the calibration node 420A. When the LTS nodes at the door frame, for example, indicate that the tag 400 is present in the floor, the LTS control apparatus 440 may then inform the calibration node 420A that calibration process at the floor accuracy may be triggered. In yet another embodiment, upon detecting the mobile tag 400 by several calibration nodes 420A and 420B or upon detecting several calibration nodes 420A and 420B by the mobile tag 400, the calibration process may be carried out with the calibration node 420A obtaining or providing the strongest signal with respect to the mobile tag 400, i.e. among the signals between the mobile tag 400 and the calibration nodes 420A and 420B. This way it may be known with a high probability that the tag 400 and the calibration node 420A are in the same floor.

In the embodiment of Figure 5, the calibration process may comprise informing the mobile tag 400 of the floor where it is at that moment. Then the mobile tag 400 may correct the floor the mobile tag 400 has estimated to equal the received correct floor number. Alternative manners in performing the calibration procedure exist and they are detailed later. As a result, the floor indication by the height sensor 410 is, at least after the calibration process, correct.

More accurate calibration may be provided in the embodiment of Figure 6A, wherein the calibration node 420 is configured to co-operate in carrying out the calibration process when the mobile tag 400 is in a location where the mobile tag is in the coverage area of the calibration node 420 and the height of the mobile tag 400 with respect to the height of the calibration node 420 is known. This difference in height is shown with a reference numeral 600. The difference 600 in height may be known in various manners. In an embodiment, the mobile tag 400 may be placed in a location which may be verified very accurately. Let us imagine a scenario where the tag 400 is coupled to a laptop and a user carries the laptop around the building. When the laptop is connected to an external display or to a charging apparatus, for example, the location of the laptop may be very accurately determined. This is because, in order to attach the laptop to the external display, a cord needs to be connected to the laptop and the cord has a limited length. The LTS node 420 or the LTS control apparatus 440 may have knowledge of such locations where the end of the cord for the external display approximately is. As said, the LTS node 420 or the LTS control apparatus 440 may also have the knowledge of the exact height of each calibration node 420. This way the height difference 600 may be obtained. In another embodiment, there may be a plurality of nodes in one room, wherein the nodes are located in different heights. The node providing the strongest signal may be detected and the height of that node is taken as the height of the mobile tag 400. Thus, the difference 600 may be known by comparing the heights of the calibration node 420 and the node providing/obtaining the strongest signal. Such comparison may be made at the 440 LTS control apparatus or at the calibration node 420. In yet another embodiment, the plurality of nodes in different heights may each be configured to transmit a signal to the mobile tag 400 and the tag 400 may be configured to transmit the signal back to the node which transmitted it. The transmissions may take place rapidly one at a time or simultaneously. Rapidly here may denote in such a speed that the mobile tag 400 is substantially static during the time the transmissions are performed. Such dedicated transmission from the mobile tag 400 to the nodes may be performed by indicating the identifier of the transmitting node in the return signal. Alternatively, the mobile tag 400 may multicast or broadcast a signal to the nodes. The nodes may then each determine the round trip time of the signal. The plurality of nodes may be at the door frame or a similar location, where it is known that the tag 400 passing by or being static is not behind obstacles. The node obtaining the shortest round trip time may be determined as the one who is at the same height as the tag 400. As a result, the tag 420A may know the height difference 600 and, when obtaining the indication of the estimated height from the tag 400, the node 420 may indicate a correction for the estimated height. This way the height sensor 410 of the mobile tag 400 may be calibrated to the correct height.

In the embodiment as shown in Figure 6B, at least one charging apparatus 602 comprises the calibration node 420, wherein the height sensor 410 is calibrated when the mobile tag 400 or an apparatus coupled to the mobile tag 400 is being charged by one of the at least one charging apparatus 602. As already above explained, the charging of the tag 400 or the apparatus coupled to the tag 400 may provide for accurate estimation of the height and location of mobile tag 400 because a charging cord 604 is limited in length. There may also be such scenario where a laptop is mounted on a dock, wherein the dock has a charging output which receives a charging input of the laptop. In such a scenario the tag 400 and the charging unit 602 become wirelessly coupled and when the calibration node 420 is comprised in the charging unit 602 (i.e. the dock, for example), the exact height of the tag 400 is consequently obtained by the calibration node 420. This is due to the fact that the correct height of the mobile tag 400 is the same as the height of the calibration node 420 comprised in the charging apparatus 602. The embodiment of Figure 6B may provide for user friendly calibration process as the user does not need to take the apparatus separately for calibration but only needs to bring the tag 400 or the apparatus coupled to the tag 400 for charging. This is something the user would inevitably do at some point. This way the calibration process inevitably takes place. The calibration process may be totally invisible to the user and requires no user intervention.

Further embodiment may be such wherein the at least one charging apparatus, such as possibly a wireless charging unit, is equipped with a Hall probe utilizing magnetic fields emitted by the mobile tag 400 in order to accurately locate the mobile tag being charged. Thus, when the user puts his mobile tag to a charging unit employing magnetic fields, the location of the tag 400 may be accurately determined because the location of the magnetic charger may be known in the LTS control apparatus or the magnetic charger may comprise the calibration node 420. It should be noted that in the embodiment of Figure 6B, the calibration node 420 may not necessarily need to be in the charger unit 602. It is enough if the LTS control apparatus 440 knows the height of such charging apparatus and the height of the calibration node 420 at least somewhat accurately, as explained with respect to Figures 5 and 6A. The needed accuracy may be the floor accuracy, for example.

Alternatively or in addition to the at least one charging apparatus, such as the charging unit 602 shown in Figure 6B, may be equipped with a wire connectable to the mobile tag 400. As a consequence, the calibration process may be very accurately performed by the calibration node 420. The calibration node 420 may also provide accurate horizontal location of the mobile tag 400 to the LTS control apparatus 440 because the calibration node is one of the LTS nodes which substantially simultaneously perform location tracking. It is advantageous to have the calibration process made by such LTS node because the LTS node may have accurate knowledge of the location of the mobile tag 400 which may be of use when performing the calibration process.

The mobile tag 400 may detect that a charger 602 with calibration capability has been coupled to the mobile tag 400 or to the apparatus carrying the mobile tag 400. Alternatively, the calibration node 420 comprised in the charger 602 or the LTS control apparatus 440 may detect that the mobile tag 400 is connected to the charger 602. After such detection, a calibration process may be carried out with respect to the connected mobile tag 400. An indication that the calibration process is to be carried out may then be given.

It should be noted that the mobile tag 400 and the LTS node 420 need not be in the same level when performing calibration process, as shown in Figure 6A. It may be sufficient that the height difference between the LTS node 420 and the mobile tag 400 is detectable. Thus any location where the mobile tag 400 is accurately detectable in terms of its height may be sufficient. For example, it may be known that a node 420 is mounted on a certain height, such as 1.45 meters for example, because this may be measured when the node 420 is mounted in the beginning. In addition, there may be such a place in the room comprising the LTS node 420 where the mobile tag 400 is accurately determined in terms of its height (and possibly horizontal location). Such place may be associated with the charger unit 602, the hall probe, at least one LTS node 420 definitely in contact with the tag 400, etc. In one example, let us assume that the tag 400 is coupled to an identification unit which is needed to open a door in the building by bringing the identification unit in the vicinity of the door locking unit. As the height of the door locking unit is known, for example 1.20 meters, the relative difference may be obtained between the height of the tag (=1.20m) and the height of the calibration node (=1.45m) as 0.25 meters. It should be noted that the door locking unit need not comprise the calibration node 420 although it may do so. By knowing the relative difference (0.25 meters) between the calibration node 420 and the mobile tag (400), the calibration process may be carried out if the reported values of height provided by the mobile tag 400 do not match the correct height value which is in this case 1.2m (=1.45m-0.25m).

The calibration process may take place periodically or on a request. When the calibration process with respect to a specific mobile tag takes place periodically, the calibration node 420 may not perform the calibration process each time the mobile tag 400 is brought to such a location where the calibration process is possible to be carried out. For instance, if the charging of a laptop is made every three hours, the calibration process may not be performed each time the laptop is being charged but only every tenth time or only after a few days or weeks has passed since the last calibration process. The periodicity of charging may be configured to the calibration nodes, for example, and adjusted if needed. The periodicity should be understood broadly to cover substantially periodical operation. This is because the mobile tag 400, at the time for the next periodical calibration process is to take place, may not be operating or may be in such a location where calibration by any calibration node 420 is not possible. In such cases the calibration process may take place as soon as possible. The calibration process may also take place only on request. Such request may be placed by the mobile tag 400, by the calibration node 420 or by the LTS control apparatus 440. The request may be based on an assumption that the height sensor is not providing correct results. Such indication may be due to the fact that it has already been a long time, such as months, from the last calibration process. Alternatively, the LTS control apparatus 440 may obtain indication that the height values provided by the mobile tag 400 are not correct, as will be explained later. The calibration node 420 may also obtain such indication of incorrect estimation when the calibration node 420 is at a known height with respect to the mobile tag 400 and the estimated height values by the mobile tag 400 are off with respect to the correct known values. In yet further embodiment, the height sensor is calibrated each time the calibration is possible to be carried out by any of the calibration nodes 420.

As shown in Figure 2, for example, the system for calibrating the mobile tag 400 may further comprise the LTS control apparatus 440. The LTS control apparatus 440 may be configured to control operational parameters of the plurality of location tracking nodes 120 to 130 and the mobile tag 400. Naturally, there may be more than one mobile tag 400 in the area where the location tracking is carried out as shown in Figure 1. The LTS control apparatus 440 may control the operational parameters of each of them, for example. The LTS control apparatus 440 may monitor and control the transmission powers and other communication parameters, control detection parameters, detection thresholds, resolve link failures, etc. In an embodiment, the LTS control apparatus 440 may be configured to determine a need for the calibration of the height sensor 410 on the basis of the LTS control apparatus 440 monitoring information related to the height of the mobile tag 400, wherein the information is received from at least one of the plurality of location tracking nodes. This is shown in Figure 7 where the LTS control apparatus 440 obtains data related to the location and height of the mobile tag 400 from LTS nodes 720 and 722. Upon noticing that the height of the mobile tag varies in an unexpected manner, the LTS control apparatus 440 may communicate a message recommending to perform the calibration process. An example of unexpected manner is where the LTS control apparatus 440 first obtains an indication from LTS node 720 indicating that the tag 400 is in the second floor. The node 720 may also provide the estimated height of the mobile tag 400 to the LTS control apparatus 440. Let us assume that the estimated height at that point correctly indicates that the tag 400 is in the second floor. Then the LTS control apparatus 440 obtains an indication from LTS node 722 indicating that the tag 400 is in the first floor. The node 722 may likewise also provide the estimated height of the mobile tag 400 to the LTS control apparatus 440. Let us assume that the indicated estimated height of the mobile tag 400 now incorrectly indicates that the mobile tag 400 would still be in the second floor. However, the LTS control apparatus 440 may safely assume that the tag 400 has moved to the first floor because the signal strength of the signal between the node 722 and the mobile tag 400 is sufficiently strength, i.e. above a certain threshold, for example. In this case, the LTS control apparatus 440 may communicate a message recommending to perform the calibration process. The message may be transmitted to the mobile tag 400 via the nodes 720 and/or 722. Alternatively, the message may recommend the at least one of the calibration nodes to perform the calibration process as soon as possible. Such indication may be of use if the calibration process is otherwise scheduled to occur substantially periodically and the next calibration process would not take place at this point according to periodic schedule.

In yet another embodiment, the LTS node 420 comprises a height sensor 430 as shown in Figure 4 in addition to the known fixed height of the LTS node. Accordingly, the LTS node 420 with the height sensor 430 may provide height values to the LTS control apparatus 440. However, the control apparatus 440, obtaining the measured height values from the LTS node 420, may also comprise the information of the known fixed height of the LTS node 430. The control apparatus 440 may compare the known height of the LTS node 420 and the received estimated (measured) height and determine whether there is a difference between the values. Such difference of values existing is possible because the height sensor 430 may not be providing correct values due to changed air temperature, need of calibration, etc. Upon noticing a difference between the height values, the control apparatus 440 may determine the amount of the difference. The control apparatus 440 may apply the determined amount of difference between the height values in the height calibration process for the values provided by the mobile tag 400. This is because the error in the estimated height provided by the LTS node 420 may, with a high probability, be substantially the same error as produced by the mobile tag 400 when the mobile tag 400 reports height values estimated by the height sensor 410 of the mobile tag 400. This is especially true when the height sensors 410 and 430 are of the same kind but also when they are of different kind operating under same common principles. As a result, the control apparatus may either apply the known error in correcting the height values reported by the mobile tag 400 or calibrate the height sensor 410 of the mobile tag 400 as soon as possible. In other words, the control apparatus 440 may apply the determined amount of difference in the height calibration process by correcting the height values provided by the mobile tag 400 or by informing the mobile tag 400 of a required correction. The former option may allow for a correct height location of the mobile tag 400 (i.e. one type of calibration process) without the mobile tag 400 being calibrated or affected at all. Although explained that the control apparatus performs the comparison, determination and correction, the above procedure may be performed solely the LTS node 420 when the LTS node 420 knows its own true height.

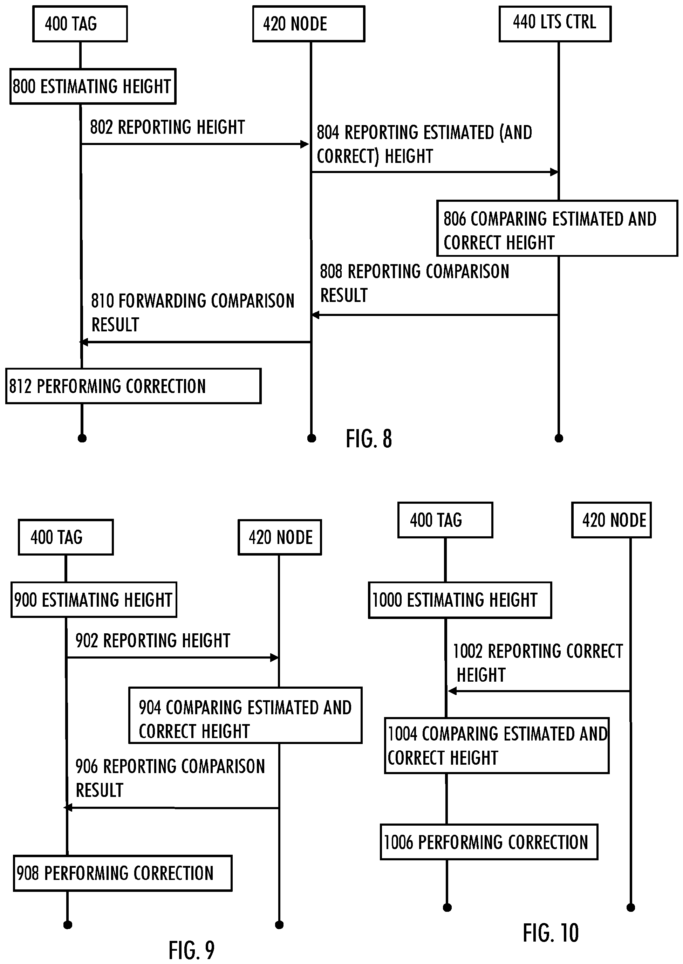

As said, the calibration node 420 may co-operate in the calibration process by forwarding data related to the calibration process between the mobile tag 400 and the LTS control apparatus 440 of the location tracking network, wherein the LTS control apparatus 440 co-operates in carrying out the calibration process, thus facilitating the centralized calibration process. An embodiment related to this is shown in Figure 8. In Figure 8, the tag 400 may in step 800 estimate its height by using the height sensor comprised in the mobile tag 400. Once obtained the height estimation, the mobile tag 400 may in step 802 transmit a signal indicating the estimated height of the mobile tag 400 to the calibration node 420 co-operating in the calibration process. The calibration node 420 may then in step 804 transmit a signal indicating the received estimated height to the LTS control apparatus. In the simplest manner the calibration node 420 may forward the signal received from the mobile tag 400. However, the calibration node 420 may also add own attributes and form a new signal that is transmitted to the LTS control apparatus 440. The new attributes may comprise the correct height of the calibration node 420 if the LTS control apparatus 440 is not otherwise aware of the correct height of the calibration node 420, for example, and identification information of the tag 400 and the node 420. In step 806, the LTS control apparatus 440 may perform comparison between the estimated height of the mobile tag 400 and the known height of the calibration node 420. It may be that the two height values should be equal in the case the mobile tag 400 is at the same level as the calibration node 420. However, it may also be that there is a known offset between the reported heights. Such offset may be present in the embodiment of Figure 6A, for example. It may also be that the calibration is performed at the floor accuracy. Then it is enough if the two heights indicate the same floor, for example. In steps 808 and 810 the LTS control apparatus 440 may transmit, to the mobile tag 400 via the calibration node 420, information related to the comparison result. The comparison result may thus indicate what the needed correction for the estimated heights is. The accuracy of the correction may depend of whether the calibration is to be made at the floor accuracy or at a more accurate level. In an embodiment, the comparison result indicates the needed correction in meters or in centimeters, for example. As a result, the mobile tag 400 may in step 812 perform the correction of the estimated height on the basis of the comparison result. Thus, the mobile tag 400 after the calibration process may provide correct height estimation values. Alternatively, steps 808 to 812 may be omitted if the control apparatus 440 perform the calibration process so that the control apparatus 440 corrects the reported values itself without informing the mobile tag 400 about the required correction.

As said, in an embodiment the calibration node 420 comprises calibration means configured to carry out the calibration process without calibration related input from the LTS control apparatus 440. Such embodiment is shown in Figure 9. In Figure 9, the mobile tag 400 may in step 900 estimate its height by using the height sensor comprised in the mobile tag 400. Once obtained the height estimation, the mobile tag 400 may in step 902 transmit a signal indicating the estimated height of the mobile tag 400 to the calibration node 420 co-operating in the calibration process. Once the calibration node 420 receives the signal indicating the estimated height difference, the calibration node 420, knowing its own correct height, may in step 904 perform comparison between the estimated height of the mobile tag 400 and the known height of the calibration node 420 in the same way as the LTS control apparatus 440 does in connection to step 808 of Figure 8. The information of the correct height may be precoded to the calibration node 420, for example. As a result, the node 420 may in step 906 transmit to the mobile tag 400 information related to the comparison result. Consequently, the mobile tag 400 may in step 908 perform the correction of the estimated height on the basis of the comparison result, i.e. on the basis of the received signal indicating the difference between the two estimated and the correct height. Thus, the mobile tag 400 may, after the calibration process, provide correct height estimation values. Also here the steps 906 and 908 may be omitted when the calibration node 420 perform the correction of height values.

Figure 10 provides yet one alternative embodiment for carrying out the calibration process. In step 1000, the mobile tag 400 may estimate its height by using the height sensor comprised in the mobile tag 400. In step 1002, the calibration node 420 may transmit a signal indicating the known height of the calibration node 420 to the mobile tag 400. The known height may be precoded to the calibration node 420 or received from the LTS control apparatus 440 (although not shown in Figure 10), for example. Once receiving the signal indicating the known height of the calibration node 420, the mobile tag 400 may itself in step 1004 perform the comparison between the estimated height of the mobile tag 400 and the known height of the calibration node 420 in the same way as the LTS control apparatus 440 does in step 808 of Figure 8 or the calibration node 420 does in step 904 of Figure 9. Consequently, the mobile tag 400 may in step 1006 perform the correction of the estimated height on the basis of the comparison result. Thus, the mobile tag 400 may, after the calibration process, provide correct height estimation values.

As is clear from the above embodiment, the mobile tag 400 may obtain an indication of the height difference between the estimated height of the mobile tag 400 and the known height of a calibration node 420 in various manners. For example, by performing the comparison itself or by receiving a signal from the calibration node 420 or from the LTS control apparatus 440. This provides flexibility to the calibration process because each mobile tag 400 need not necessarily perform he calibration process in the same manner.

As said, although it is shown in Figures 8, 9 and 10 that the mobile tag 400 performs the correction, it may also be that the correction is applied by the calibration node 420 or by the LTS control apparatus 440 when receiving height estimates from the mobile tag 400. In this case, the mobile tag 400 need not perform the correction. This provides easier implementation of the mobile tag 400.

In the calibration processes as shown in Figures 8 to 10, the calibration node 420 or the mobile tag 400 may detect that the mobile tag 400 is at a known height with respect to the calibration node 420. The known height with respect to the calibration node 420 may indicate that the calibration node 420 and the mobile tag 400 are at the same heights, such as in Figure 6B. The known height may alternatively indicate that there is a known offset between the heights of the mobile tag 400 and the calibration node 420, as shown in Figure 6A. In an embodiment, the known height may indicate that the calibration node 420 and the mobile tag 400 are at the same floor, as shown in Figure 5, for example. After such detection is made, either the mobile tag 400 or the calibration node 420 may transmit a signal to the calibration node 420 or to the mobile tag 400, respectively. The signal may indicate that the calibration process may be started. All of this may happen without any user invention.

Let us again look at Figure 4 which illustrates block diagrams of the mobile tag 400, the LTS node 420 and the LTS control apparatus 440. The apparatuses 400, 420 and 440 may each comprise at least one processor and at least one memory including a computer program code, wherein the at least one memory and the computer program code are configured, with the at least one processor, to cause the corresponding apparatus to carry out any of the embodiments related to the calibration of the height sensor. It should be noted that Figure 4 shows only the elements and functional entities required for understanding the apparatuses. Other components have been omitted for reasons of simplicity. The implementation of the elements and functional entities may vary from that shown in Figure 4. The connections shown in Figure 4 are logical connections, and the actual physical connections may be different. The connections can be direct or indirect and there can merely be a functional relationship between components. It is apparent to a person skilled in the art that the apparatuses may also comprise other functions and structures.

The mobile tag 400 may comprise a casing and a strap used for attaching the mobile tag 400 around a neck or a wrist of a user in order to carry it conveniently. The mobile tag 400 may equally be attached to another personal electronic device carried or worn by the user, e.g. a mobile phone, a laptop, or apparel. As said, the mobile tag 400 may be configured to communicate with at least one LTS node at a given time at least for the purposes of determining the location of the mobile tag. The tag 400 may comprise a control circuitry 402 for controlling the operation of the mobile tag 400, and a memory 404 for storing information, such as identifier of the tag 400 or of the LTS nodes, data related to the height calibration process, such as the correction value for the estimated heights. The mobile tag 400 may further comprise a user interface circuitry 408 for turning the tag 400 on or off, for example. The user interface circuitry 408 may also comprise a display, input means, speaker, microphone, etc. Alternatively, the user interface circuitry 408 may be used to connect the tag 400 to another apparatus through which the user control of the tag 400 is to take place. Such external apparatus may be a mobile phone, for example. The mobile tag 400 may further comprise radio interface components or communication circuitry 406 providing the tag 400 with radio communication capabilities within the location tracking network. The radio interface components 406 may further perform the location tracking and to receive operational parameters from the LTS control apparatus, for example. The radio interface components may apply a Bluetooth protocol, for example. The memory 404 may be connected to the control circuitry 402 as shown in the Figure 4. As the mobile tag 400 may be a battery operated apparatus, the tag 400 may further comprise a charging unit 414 for co-operating in charging the mobile tag 400 from an external power source via a power cord, for example, as shown in connection to Figure 6B. The charging unit 414 may thus comprise components for receiving the charging cord from the external power source, for example. Alternatively, the charging unit 414 may be configured to operate by applying magnetic fields in the charging, instead of the electric cord. The calibration means 412 may perform the correction of the estimated height values or adjust the height sensor 410 to provide correct values. In some embodiments the calibration means 412 may further perform the comparison between the correct and the estimated height.

The calibration node 420 may be installed to a wall, ceiling, or to any other fixed or substantially fixed structure such that the location of the calibration node 420 will be static. The calibration node 420 may be connected to a mains power source to provide the calibration node 420 with electric power, or the calibration node 420 may be battery-operated, or both. The calibration node 420 may be disposed to co-operate with other nodes in covering an area, wherein the plurality of location tracking nodes is configured to carry out location tracking in the area. The node 420 may comprise a control circuitry 422 for controlling the operation of the node 420. The circuitry 422 may, for example, control the transmit power of the node 420. The node may also comprise a communication circuitry 426 for communicating with the tag 400 and/or with the LTS control apparatus 440. The memory 424 may be used to store information related to the correct height of the calibration node 420 and other information related to the calibration process, for example. The calibration node 420 may also comprise a calibration means 432 for performing the comparison of the estimated height and the correct height and/or for applying a correction to the estimated height when the mobile tag itself may not perform such correction, for example.

The LTS control apparatus, 440 may comprise control circuitry 442 which may comprise a location tracking circuitry configured to monitor for the locations of the mobile tags on the basis of input from the LTS nodes. The control circuitry 442, which may also be a control module, may be configured to control operational parameters of the LTS nodes and the mobile tags. The control circuitry 442 may, for example, monitor and control the transmission powers and other communication parameters, control detection parameters such as the above-mentioned threshold(s), resolve link failures, etc. The LTS control apparatus 440 may also comprise a memory 444 comprising an LTS node database and a mobile tag database. The databases may be used to store information related to the corresponding elements. For example, the LTS node database may keep information of the identifiers of the LTS nodes and the location and height of the LTS nodes, for example. The mobile tag database may store information regarding the location of each of the mobile tags and the identifiers of the mobile tags, for example. The LTS control apparatus 440 may also comprise a user interface 448 which may allow the user to control the location tracking system, if needed. The UI 448 may comprise a display, input means, speaker, microphone, etc. A communication circuitry 446 may be used for communicating with the LTS nodes and the mobile tags by means of a Bluetooth communication protocol. However alternative communication protocols are not excluded. The LTS control apparatus 440 may also comprise calibration means 452 for co-operating in the calibration process of the height sensor 410 of the mobile tag 400. The calibration means 452 may perform the comparison of the estimated height and the correct height, apply a correction to the estimated height when the mobile tag itself may not perform such correction, for example.

The calibration means 412, 432 and/or 452 may each comprise a circuitry configured to perform the needed operations with respect to the calibration process as described in connection to Figures 1 to 10. An example circuitry may be a comparison circuitry for performing the comparison between the estimated and correct heights, for example. As is clear to a skilled person from the embodiments related to the Figures, calibration means may not be needed in each of the elements 400, 420 and 440.

The at least one processor or control circuitry 402, 422, and 442 and the circuitries within the calibration means 412, 432 and/or 452 may be implemented with a separate digital signal processor provided with suitable software embedded on a computer readable medium, or with a separate logic circuit, such as an application specific integrated circuit (ASIC). The at least one processor may comprise an interface, such as computer port, for providing communication capabilities.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Thus, according to an embodiment, the apparatus comprises processing means configure to cause the apparatus to carry out any of the embodiments of any of the Figures 1 to 10. In an embodiment, the at least one processor 402, 422, and 442, the memory 404, 424, and 444, respectively, and an associated computer program code form an embodiment of processing means for carrying out the embodiments of the invention.

Embodiments as described may also be carried out in the form of a computer process defined by a computer program. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A system for carrying out a height calibration process in a wireless indoor location tracking network based at least on a Bluetooth technology, comprising:
a plurality of fixed location tracking nodes (120 to 130) disposed indoors to cover an indoor area, wherein the plurality of location tracking nodes (120 to 130) is configured to carry out location tracking in the indoor area;
a mobile tag (400) configured to communicate with at least one location tracking node (120 to 130) at a given time at least for the purposes of determining the location of the mobile tag (400), wherein the mobile tag (400) comprises a height sensor (410) configured estimate the height of the mobile tag (400); and
at least one location tracking node of the plurality of fixed location tracking nodes (120 to 130) is a calibration node (420) configured to co-operate in carrying out the height calibration process during operation of the location tracking network by providing height corrections to the mobile tag, wherein the height of each calibration node (420) is known.

2. The system on claim 1, wherein the calibration process is carried out without user intervention.

3. The system of any of claims 1 to 2, wherein the height of the at least one calibration node (420) is known at a floor accuracy.

4. The system of claim 3, wherein a calibration node (420) is configured to co-operate in carrying out the calibration process when the mobile tag (400) is in the coverage area of the calibration node (420) and the mobile tag (400) is in the same floor as the calibration node (420), wherein the calibration process is carried out at a floor accuracy.

5. The system of any of claims 3 to 4, wherein, upon detecting the mobile tag (400) by several calibration nodes (420) or upon detecting several calibration nodes (420) by the mobile tag (400), carrying out the calibration process with the calibration node (420) obtaining or providing the strongest signal with respect to the mobile tag (400).

6. The system of any of claims 1 to 5, the system further comprising:
at least one charging apparatus (602) comprising a calibration node (420), wherein the height calibration process is carried out when the mobile tag (400) or an apparatus coupled to the mobile tag (400) is being charged by one of the at least one charging apparatus (602).

7. The system of any of claims 1 to 6, further comprising:
a control apparatus (440) of the location tracking network, wherein the control apparatus (440) is configured to control operational parameters of the location tracking network, wherein
the control apparatus (440) is further configured to determine a need for the height calibration process on the basis of the control apparatus (440) monitoring information related to the height of the mobile tag (400), wherein the information is received from at least one of the plurality of location tracking nodes (120 to 130); and
upon noticing that the height of the mobile tag (400) varies in an unexpected manner as opposed to expected manner, communicating a message recommending to perform the calibration process.

8. The system of any of claims 1 to 7, wherein the calibration node (420) forwards data related to the calibration process between the mobile tag (400) and a control apparatus (440) of the location tracking network, wherein the control apparatus (440) co-operates in carrying out the calibration process and is configured to control operational parameters of the location tracking network.

9. The system of any of claim 1 to 7, wherein the calibration node (420) comprises calibration means (432) configured to carry out the calibration process without calibration related input from a control apparatus (440) of the location tracking network, wherein the control apparatus (440) is configured to control operational parameters of the location tracking network.

10. The system of any of claims 1 to 9, wherein the calibration node (420) further comprises a height sensor (430) configured to estimate the height of the calibration node (420), wherein the true height of each calibration node (420) is additionally known; and the system further performs the steps of:
comparing the known true height of the calibration node (420) and the estimated height of the calibration node (420) and determining whether there is a difference between the height values;
upon noticing a difference between the height values, determining the amount of the difference; and
applying the determined amount of difference in the height calibration process by correcting the height values provided by the mobile tag (400) or by informing the mobile tag (400) of a required correction.

11. A method for carrying out a height calibration process in a wireless indoor location tracking network based at least on a Bluetooth technology, the method comprising:
estimating (900, 1000) height of a mobile tag (400) by applying a height sensor (410) comprised in the mobile tag (400);
obtaining (906, 1002), from a fixed calibration node (420), an indication of a height difference between the estimated height of the mobile tag (400) and the known height of the fixed calibration node (420), wherein the calibration node (420) is configured to co-operate in carrying out a height calibration process during operation of the indoor location tracking network, and the calibration node (420) is one of a plurality of fixed location tracking nodes (120 to 130) disposed indoors to cover an indoor area and configured to carry out indoor location tracking of the mobile tag (400); and
performing (908, 1006) a correction of the estimated height on the basis of the obtained indication indicating the difference.

12. The method of claim 11, wherein the calibration process is performed when the mobile tag (400) or the apparatus coupled to the mobile tag (400) is being charged by one of at least one charging apparatus (602) comprising the calibration node (420).

13. A method for carrying out a height calibration process in a wireless indoor location tracking network based at least on a Bluetooth technology, the method comprising:
detecting (904), by a fixed calibration node (420), that a mobile tag (400) comprising a height sensor (410) is at a known height with respect to the fixed calibration node (420);
co-operating in the height calibration process by providing (906) the mobile tag with an indication of a height difference between a height of the mobile tag (400) estimated by the mobile tag and the known height with respect to the fixed calibration node (420), wherein height of the fixed calibration node (420) is known and the calibration node (420) is one of a plurality of fixed location tracking nodes (120 to 130) disposed indoors to cover an indoor area and configured to carry out indoor location tracking of the mobile tag (400), wherein the height calibration process is carried out during operation of the indoor location tracking network.

14. The method of claim 13, wherein the calibration node (420) is comprised in a charging apparatus (602) and the height calibration process is carried out when the mobile tag (400) or an apparatus coupled to the mobile tag (400) is being charged by one of the at least one charging apparatus (602).

15. An apparatus, comprising means configured to perform a method according to any of claims 11 to 14.

## Patentansprüche

1. System zum Durchführen eines Höhenkalibrierungsverfahrens in einem drahtlosen Innenraum-Standortverfolgungsnetzwerk basierend zumindest auf einer Bluetooth-Technologie, das Folgendes umfasst:
mehrere feste Standortverfolgungsknoten (120 bis 130), die in einem Innenraum angeordnet sind, um einen Innenraumbereich abzudecken, wobei die mehreren Standortverfolgungsknoten (120 bis 130) zum Durchführen von Standortverfolgung in dem Innenraumbereich ausgelegt sind;
einen mobilen Tag (400), ausgelegt zum Kommunizieren mit wenigstens einem Standortverfolgungsknoten (120 bis 130) zu einer gegebenen Zeit wenigstens für die Zwecke des Bestimmens des Standorts des mobilen Tag (400), wobei der mobile Tag (400) einen Höhensensor (410) umfasst, der zum Schätzen der Höhe des mobilen Tag (400) ausgelegt ist; und
wobei wenigstens ein Standortverfolgungsknoten der mehreren festen Standortverfolgungsknoten (120 bis 130) ein Kalibrierungsknoten (420) ist, ausgelegt zum Kooperieren beim Durchführen des Höhenkalibrierungsverfahrens während des Betriebs des Standortverfolgungsnetzwerks durch Bereitstellen von Höhenkorrekturen für den mobilen Tag, wobei die Höhe jedes Kalibrierungsknotens (420) bekannt ist.

2. System nach Anspruch 1, wobei das Kalibrierungsverfahren ohne Benutzereingriff durchgeführt wird.

3. System nach einem der Ansprüche 1 bis 2, wobei die Höhe des wenigstens einen Kalibrierungsknotens (420) mit einer Stockwerkgenauigkeit bekannt ist.

4. System nach Anspruch 3, wobei ein Kalibrierungsknoten (420) zum Kooperieren beim Durchführen des Kalibrierungsverfahrens ausgelegt ist, wenn der mobile Tag (400) im Abdeckbereich des Kalibrierungsknotens (420) ist und der mobile Tag (400) sich auf demselben Stockwerk befindet wie der Kalibrierungsknoten (420), wobei das Kalibrierungsverfahren mit einer Stockwerkgenauigkeit durchgeführt wird.

5. System nach einem der Ansprüche 3 bis 4, wobei das Kalibrierungsverfahren nach der Erkennung des mobilen Tag (400) durch mehrere Kalibrierungsknoten (420) oder nach der Erkennung mehrerer Kalibrierungsknoten (420) durch den mobilen Tag (400) durchgeführt wird mit dem Kalibrierungsknoten (420), der das stärkste Signal mit Bezug auf den mobilen Tag (400) erhält oder bereitstellt.

6. System nach einem der Ansprüche 1 bis 5, wobei das System ferner Folgendes umfasst:
wenigstens eine Ladevorrichtung (602), die einen Kalibrierungsknoten (420) umfasst, wobei das Höhenkalibrierungsverfahren durchgeführt wird, wenn der mobile Tag (400) oder eine mit dem mobilen Tag (400) gekoppelte Vorrichtung durch eine der wenigstens einen Ladevorrichtung (602) geladen wird.

7. System nach einem der Ansprüche 1 bis 6, das ferner Folgendes umfasst:
eine Steuervorrichtung (440) des Standortverfolgungsnetzwerks, wobei die Steuervorrichtung (440) zum Steuern von Betriebsparametern des Standortverfolgungsnetzwerks ausgelegt ist, wobei
die Steuervorrichtung (440) ferner zum Bestimmen einer Notwendigkeit für das Höhenkalibrierungsverfahren ausgelegt ist auf der Basis der Steuervorrichtung (440), welche Informationen in Bezug auf die Höhe des mobilen Tag (400) überwacht, wobei die Informationen von wenigstens einem der mehreren Standortverfolgungsknoten (120 bis 130) empfangen werden; und
wobei nach der Feststellung, dass die Höhe des mobilen Tag (400) auf eine unerwartete Weise im Gegensatz zu einer erwarteten Weise variiert, einer Nachricht übermittelt wird, die die Durchführung des Kalibrierungsverfahrens empfiehlt.

8. System nach einem der Ansprüche 1 bis 7, wobei der Kalibrierungsknoten (420) Daten in Bezug auf das Kalibrierungsverfahren zwischen dem mobilen Tag (400) und einer Steuervorrichtung (440) des Standortverfolgungsnetzwerks weiterleitet, wobei die Steuervorrichtung (440) beim Durchführen des Kalibrierungsverfahrens kooperiert und zum Steuern von Betriebsparametern des Standortverfolgungsnetzwerks ausgelegt ist.

9. System nach einem der Ansprüche 1 bis 7, wobei der Kalibrierungsknoten (420) Kalibrierungsmittel (432) umfasst, ausgelegt zum Durchführen des Kalibrierungsverfahrens ohne kalibrierungsbezogene Eingaben von einer Steuervorrichtung (440) des Standortverfolgungsnetzwerks, wobei die Steuervorrichtung (440) zum Steuern von Betriebsparametern des Standortverfolgungsnetzwerks ausgelegt ist.

10. System nach einem der Ansprüche 1 bis 9, wobei der Kalibrierungsknoten (420) ferner einen Höhensensor (430) umfasst, ausgelegt zum Schätzen der Höhe des Kalibrierungsknotens (420), wobei die wahre Höhe jedes Kalibrierungsknotens (420) zusätzlich bekannt ist; und wobei das Verfahren ferner die folgenden Schritte ausführt:
Vergleichen der bekannten wahren Höhe des Kalibrierungsknotens (420) und der geschätzten Höhe des Kalibrierungsknotens (420) und Feststellen, ob es eine Differenz zwischen den Höhenwerten gibt;
nach der Feststellung einer Differenz zwischen den Höhenwerten Bestimmen des Betrags der Differenz; und
Anwenden des vorgegebenen Differenzbetrags in dem Höhenkalibrierungsverfahren durch Korrigieren der vom mobilen Tag (400) bereitgestellten Höhenwerte oder durch Informieren des mobilen Tag (400) über eine erforderliche Korrektur.

11. Verfahren zum Durchführen eines Höhenkalibrierungsverfahrens in einem drahtlosen Innenraum-Standortverfolgungsnetzwerk basierend zumindest auf einer Bluetooth-Technologie, wobei das Verfahren Folgendes beinhaltet:
Schätzen (900, 1000) einer Höhe eines mobilen Tag (400) durch Anwenden eines in dem mobilen Tag (400) enthaltenen Höhensensors (410);
Erhalten (906, 1002) von einem festen Kalibrierungsknoten (420) ein Indikation einer Höhendifferenz zwischen der geschätzten Höhe des mobilen Tag (400) und der bekannten Höhe des festen Kalibrierungsknotens (420), wobei der Kalibrierungsknoten (420) zum Kooperieren beim Durchführen eines Höhenkalibrierungsverfahrens während des Betriebs des Innenraum-Standortverfolgungsnetzwerks ausgelegt ist und der Kalibrierungsknoten (420) einer von mehreren festen Standortverfolgungsknoten (120 bis 130) ist, die im Innenraum zum Abdecken eines Innenraumbereichs angeordnet sind, und ausgelegt zum Durchführen einer Innenraum-Standortverfolgung des mobilen Tag (400); und
Durchführen (908, 1006) einer Korrektur der geschätzten Höhe auf der Basis der erhaltenen Indikation, welche die Differenz indiziert.

12. Verfahren nach Anspruch 11, wobei das Kalibrierungsverfahren dann durchgeführt wird, wenn der mobile Tag (400) oder die mit dem mobilen Tag (400) gekoppelte Vorrichtung durch eine von wenigstens einer Ladevorrichtung (602) geladen wird, die den Kalibrierungsknoten (420) umfasst.

13. Verfahren zum Durchführen eines Höhenkalibrierungsverfahrens in einem drahtlosen Innenraum-Standortverfolgungsnetzwerk basierend zumindest auf einer Bluetooth-Technologie, wobei das Verfahren Folgendes beinhaltet:
Erkennen (904) durch einen festen Kalibrierungsknoten (420), dass ein mobiler Tag (400) mit einem Höhensensor (410) sich in Bezug auf den festen Kalibrierungsknoten (420) in einer bekannten Höhe befindet;
Kooperieren in dem Höhenkalibrierungsverfahren durch Bereitstellen (906) an den mobilen Tag einer Indikation einer Höhendifferenz zwischen einer Höhe des mobilen Tag (400), geschätzt durch den mobilen Tag, und der bekannten Höhe mit Bezug auf den festen Kalibrierungsknoten (420), wobei die Höhe des festen Kalibrierungsknotens (420) bekannt ist und der Kalibrierungsknoten (420) einer von mehreren im Innenraum angeordneten festen Standortverfolgungsknoten (120 bis 130) ist, um einen Innenraumbereich abzudecken, und ausgelegt zum Durchführen von Innenraum-Standortverfolgung des mobilen Tag (400), wobei das Höhenkalibrierungsverfahren während des Betriebs des Innenraum-Standortverfolgungsnetzwerks durchgeführt wird.

14. Verfahren nach Anspruch 13, wobei der Kalibrierungsknoten (420) in einer Ladevorrichtung (602) enthalten ist und das Höhenkalibrierungsverfahren durchgeführt wird, wenn der mobile Tag (400) oder eine mit dem mobilen Tag (400) gekoppelte Vorrichtung von einer der wenigstens einen Ladevorrichtungen (602) geladen wird.

15. Vorrichtung, die Mittel umfasst, ausgelegt zum Ausführen eines Verfahrens nach einem der Ansprüche 11 bis 14.

## Revendications

1. Système de réalisation d'un processus d'étalonnage de la hauteur dans un réseau de suivi d'emplacement intérieur sans fil sur la base d'au moins une technologie Bluetooth, comprenant :
une pluralité de noeuds de suivi d'emplacement fixes (120 à 130) disposée à l'intérieur pour couvrir une zone intérieure, où la pluralité de noeuds de suivi d'emplacement (120 à 130) est configurée pour réaliser un suivi d'emplacement dans la zone intérieure ;
une étiquette mobile (400) configurée pour communiquer avec au moins un noeud de suivi d'emplacement (120 à 130) à un moment donné au moins dans le but de déterminer l'emplacement de l'étiquette mobile (400), où l'étiquette mobile (400) comprend un capteur de hauteur (410) configuré pour estimer la hauteur de l'étiquette mobile (400) ; et
au moins un noeud de suivi d'emplacement de la pluralité de noeuds de suivi d'emplacement fixes (120 à 130) est un noeud d'étalonnage (420) configuré pour coopérer à la réalisation du processus d'étalonnage de la hauteur au cours du fonctionnement du réseau de suivi d'emplacement en fournissant des corrections de la hauteur à l'étiquette mobile, où la hauteur de chaque noeud d'étalonnage (420) est connue.

2. Système de la revendication 1, dans lequel le processus d'étalonnage est réalisé sans intervention de l'utilisateur.

3. Système de l'une des revendications 1 à 2, dans lequel la hauteur de l'au moins un noeud d'étalonnage (420) est connue à une précision d'étage.

4. Système de la revendication 3, dans lequel un noeud d'étalonnage (420) est configuré pour coopérer à la réalisation du processus d'étalonnage lorsque l'étiquette mobile (400) se trouve dans la zone de couverture du noeud d'étalonnage (420) et l'étiquette mobile (400) se trouve dans le même étage que le noeud d'étalonnage (420), où le processus d'étalonnage est réalisé à une précision d'étage.

5. Système de l'une des revendications 3 à 4, dans lequel, lors de la détection de l'étiquette mobile (400) par plusieurs noeuds d'étalonnage (420) ou lors de la détection de plusieurs noeuds d'étalonnage (420) par l'étiquette mobile (400), le processus d'étalonnage est réalisé avec le noeud d'étalonnage (420) obtenant ou fournissant le signal le plus fort par rapport à l'étiquette mobile (400).

6. Système de l'une des revendications 1 à 5, le système comprenant en outre :
au moins un appareil de charge (602) comprenant un noeud d'étalonnage (420), où le processus d'étalonnage de la hauteur est réalisé lorsque l'étiquette mobile (400) ou un appareil couplé à l'étiquette mobile (400) est en train d'être chargé(e) par l'un de l'au moins un appareil de charge (602).

7. Système de l'une des revendications 1 à 6, comprenant en outre :
un appareil de commande (440) du réseau de suivi d'emplacement, où l'appareil de commande (440) est configuré pour commander des paramètres de fonctionnement du réseau de suivi d'emplacement, où
l'appareil de commande (440) est en outre configuré pour déterminer un besoin du processus d'étalonnage de la hauteur sur la base d'informations de surveillance de l'appareil de commande (440) relatives à la hauteur de l'étiquette mobile (400), où les informations sont reçues à partir d'au moins l'un de la pluralité de noeuds de suivi d'emplacement (120 à 130) ; et
après avoir remarqué que la hauteur de l'étiquette mobile (400) varie d'une manière inattendue plutôt que de manière attendue, un message recommandant d'effectuer le processus d'étalonnage est communiqué.

8. Système de l'une des revendications 1 à 7, dans lequel le noeud d'étalonnage (420) transfère des données relatives au processus d'étalonnage entre l'étiquette mobile (400) et un appareil de commande (440) du réseau de suivi d'emplacement, où l'appareil de commande (440) coopère à la réalisation du processus d'étalonnage et est configuré pour commander les paramètres de fonctionnement du réseau de suivi d'emplacement.

9. Système de l'une des revendications 1 à 7, dans lequel le noeud d'étalonnage (420) comprend un moyen d'étalonnage (432) configuré pour réaliser le processus d'étalonnage sans entrée relative à l'étalonnage provenant d'un appareil de commande (440) du réseau de suivi d'emplacement, où l'appareil de commande (440) est configuré pour commander les paramètres de fonctionnement du réseau de suivi d'emplacement.

10. Système de l'une des revendications 1 à 9, dans lequel le noeud d'étalonnage (420) comprend en outre un capteur de hauteur (430) configuré pour estimer la hauteur du noeud d'étalonnage (420), où la hauteur réelle de chaque noeud d'étalonnage (420) est en outre connue ; et le système effectue en outre les étapes qui consistent :
à comparer la hauteur réelle connue du noeud d'étalonnage (420) et la hauteur estimée du noeud d'étalonnage (420) et à déterminer s'il existe une différence entre les valeurs de la hauteur ;
à déterminer, après avoir remarqué une différence entre les valeurs de la hauteur, la quantité de la différence ; et
à appliquer la quantité déterminée de différence dans le processus d'étalonnage de la hauteur en corrigeant les valeurs de la hauteur fournies par l'étiquette mobile (400) ou en informant l'étiquette mobile (400) d'une correction requise.

11. Procédé de réalisation d'un processus d'étalonnage de la hauteur dans un réseau de suivi d'emplacement intérieur sans fil sur la base d'au moins une technologie Bluetooth, le procédé comprenant le fait :
d'estimer (900, 1000) la hauteur d'une étiquette mobile (400) en appliquant un capteur de hauteur (410) compris dans l'étiquette mobile (400) ;
d'obtenir (906, 1002), à partir d'un noeud d'étalonnage fixe (420), une indication d'une différence de hauteur entre la hauteur estimée de l'étiquette mobile (400) et la hauteur connue du noeud d'étalonnage fixe (420), où le noeud d'étalonnage (420) est configuré pour coopérer à la réalisation d'un processus d'étalonnage de la hauteur au cours du fonctionnement du réseau de suivi d'emplacement intérieur, et le noeud d'étalonnage (420) est l'un d'une pluralité de noeuds de suivi d'emplacement fixes (120 à 130) disposée à l'intérieur pour couvrir une zone intérieure et configurée pour réaliser un suivi d'emplacement intérieur de l'étiquette mobile (400) ; et
d'effectuer (908, 1006) une correction de la hauteur estimée sur la base de l'indication obtenue indiquant la différence.

12. Procédé de la revendication 11, dans lequel le processus d'étalonnage est effectué lorsque l'étiquette mobile (400) ou l'appareil couplé à l'étiquette mobile (400) est en train d'être chargé(e) par l'un de l'au moins un appareil de charge (602) comprenant le noeud d'étalonnage (420).

13. Procédé de réalisation d'un processus d'étalonnage de la hauteur dans un réseau de suivi d'emplacement intérieur sans fil sur la base d'au moins une technologie Bluetooth, le procédé comprenant le fait :
de détecter (904), par un noeud d'étalonnage fixe (420), qu'une étiquette mobile (400) comprenant un capteur de hauteur (410) est à une hauteur connue par rapport au noeud d'étalonnage fixe (420) ;
de coopérer dans le processus d'étalonnage de la hauteur en fournissant (906) à l'étiquette mobile une indication d'une différence de hauteur entre une hauteur de l'étiquette mobile (400) estimée par l'étiquette mobile et la hauteur connue par rapport au noeud d'étalonnage fixe (420), où la hauteur du noeud d'étalonnage fixe (420) est connue et le noeud d'étalonnage (420) est l'un d'une pluralité de noeuds de suivi d'emplacement fixes (120 à 130) disposée à l'intérieur pour couvrir une zone intérieure et configurée pour réaliser un suivi d'emplacement intérieur de l'étiquette mobile (400), où le processus d'étalonnage de la hauteur est réalisé au cours du fonctionnement du réseau de suivi d'emplacement intérieur.

14. Procédé de la revendication 13, dans lequel le noeud d'étalonnage (420) est compris dans un appareil de charge (602) et le processus d'étalonnage de la hauteur est réalisé lorsque l'étiquette mobile (400) ou un appareil couplé à l'étiquette mobile (400) est en train d'être chargé(e) par l'un de l'au moins un appareil de charge (602).

15. Appareil, comprenant un moyen configuré pour effectuer un procédé selon l'une des revendications 11 à 14.
